# EUROPEAN PATENT APPLICATION

(11) **EP 3 713 261 A1**
(43) Date of publication of application: **23.09.2020**
(21) Application number: 19000141.2
(22) Date of filing: 20.03.2019
(51) Int. Cl.: H04W 4/60, H04W 52/02

(54) **AGGRESSION MANAGEMENT FOR A MOBILE DEVICE**

(71) Applicant: Giesecke+Devrient Mobile Security GmbH, 81677 München (DE)
(72) Inventor: Tea, Vui Huang, SE-12061 Stockholm (SE)

(57) **Abstract**

The present invention is directed towards a policy based aggression management of a mobile device in a mobile telecommunication infrastructure along with a system arrangement being adapted accordingly. Furthermore, the present invention is directed towards an embedded Universal Integrated Circuit Card for operating at least a part of the suggested method steps and for usage as a component within the system arrangement. The present invention allows a flexible aggression management and requires only little technical effort. Moreover, a computer program product is suggested comprising instructions for operating the suggested system arrangement and implementing the method steps.

## Description

The present invention is directed towards a policy based aggression management of a mobile device in a mobile telecommunication infrastructure along with a system arrangement being adapted accordingly. Furthermore, the present invention is directed towards an embedded Universal Integrated Circuit Card for operating at least a part of the suggested method steps and for usage as a component within the system arrangement. The present invention allows a flexible aggression management and requires only little technical effort. Moreover, a computer program product is suggested comprising instructions for operating the suggested system arrangement and implementing the method steps.

US 8,516,552 B2 teaches a wireless end-user communication device comprising a user interface and at least one processor configured to perform policy management.

"IoT Device Connection Efficiency Guidelines Version 3.0", dated 30 March 2016, GSM Association, Official Document TS.34 teaches a policy based aggression management solution.

According to the state of the art distributed telecommunication infrastructures are commonly known in which a mobile end device communicates with further end devices using physical resources of the infrastructure. Consequently, the infrastructure provides additional network components which provide specific resources to the end device. An example regarding such a resource is the available bandwidth, which allows the end device to transmit data under certain limitations. The end device has to subscribe to a network and request such resources. Typically, the end device meets such restrictions but it may occur that the end device obtains excessively large amounts of data or transmits data. Moreover, similar actions may be performed over and over again resulting in no further advantages but only produce overhead. Such behavior blocks hardware resources at no further advantage and shall be prevented.

The described behavior may be based on an error regarding the implementation of protocols but likewise an attack may be performed using such behavior. In general, in case an end device allocates large amounts of resources it can be concluded that a violation is present, which is generally referred to as an aggression. Summarizing this issue, an aggression describes the fact that an end device allocates excessively large amounts of resources. Such behavior may result in a lack of available hardware resources and consequently, may affect further communication sessions of other communications partners.

An IoT device overusing the network may lead to problems such as reduced lifetime of the SIM card by increasing dramatically the read/ write cycles, increased power consumption of the device due to continuous restarts which may also affect the device lifetime, local issues within the MNO's network such as cell congestion, capacity and performance problems within the MNO's core network, such as signaling storms, which result in wide area network disruption, negatively impacting the IoT service performance, potentially resulting in delayed communications, degradation of service quality and even service outages amongst others. MNO is an abbreviation for Mobile Network Operator.

To address that GSMA has come up with the Radio Policy Manager RPM to protect the network when the device is aggressively trying to access the network following various NAS reject scenarios. SIM-based RPM parameters shall take precedence over any Communication Module Firmware based RPM parameters. Functionalities related to RPM Operation Management Counters shall be disabled if RPM parameters are not present on the SIM.

The state of the art has recognized such problems and provides a solution referring to policy management in the context of aggression handling. The prior art provides specific implementations which are deployed on the so-called Communication Module. However, there is the disadvantage that the Communication Module is typically not standardized and typically not updated. The Communication Module vendors have to be persuaded and convinced to adopt the latest version of the Policy Enforcement Engine. Consequently, end devices are delivered comprising a Communication Module which is not up to date and consequently, outdated policies are delivered to the client. There is typically no way of updating the policy management while the end device is in the field and especially there is no implementation allowing a flexible update of the policy management during operation.

Summarizing these problems unwanted dependencies result as typically the Mobile Network Operator MNO has to be in a position to update the policy management without further permission of the hardware vendor. In general, a solution is required which allows a policy based aggression management at runtime meaning that such modules can be updated during runtime and at little technical effort.

Accordingly, it is an object of the present invention to provide a method for policy based aggression management of a mobile device, which allows flexible updates even in case the mobile device is already in the field and which can be performed using little technical effort. Moreover, it is an object of the present invention to provide a respectively arranged embedded Universal Integrated Circuit Card arranged for usage in the suggested method along with a system arrangement for policy based aggression management. Moreover, a computer program product shall be suggested providing instructions implementing the suggested method or operating the suggested system arrangement.

The object is solved according to features of independent claim 1. Further advantages are provided by the dependent claims.

Accordingly, a method for policy based aggression management of a mobile device in a mobile telecommunication infrastructure is suggested comprising providing a Policy Enforcement Engine and providing a set of rules forming the policy, each rule describing an interaction of the mobile device with the mobile telecommunication infrastructure using a Communication Module, operating the policy by means of the provided Policy Enforcement Engine, wherein the Policy Enforcement Engine at least in part controls the Communication Module and the Policy Enforcement Engine is operated on an embedded Universal Integrated Circuit Card of the mobile device.

According to an aspect of the present invention the solution has three main components, namely a policy being defined by the Mobile Network Operator MNO. The policy defining the intended interaction of the USIM, also referred to as embedded Universal Integrated Circuit Card, and consequently, the Communication Module with the mobile network, based on the Mobile Network Operator's specific access preferences. Moreover, one component is a USIM based Policy Enforcement Engine, coupled with the USIM based quality of service for conscious network awareness to initiate preemptive remedial actions. One further component is the over-the-air network agnostic policy and engine distribution/update server.

The notions embedded Universal Integrated Circuit Card eUICC, eSIM and USIM can typically be used interchangeably if not indicated otherwise.

The advantages of USIM based to the original Communication Module based policy enforcement engine is the removal of the unwanted dependency on unpredictable and non-MNO-owned nor controlled Communication Modules. The Communication Modules are hard to standardize and are typically not updated. The Communication Module vendors have to be persuaded and convinced to adopt the latest version of the policy enforcement engine, if at all. There will also be a time lag to the rollout.

The USIM is owned by the MNO and a separate entity from the Communication Modules. A USIM based policy enforcement engine can be remotely updated OTA by the MNO in bulk at any time. This eliminates proliferation of multiple generations of outdated or flawed Communication Module based policy enforcement engines. The MNO sets the pace and has ultimate control.

The MNO defined policy according to an aspect of the present invention can be assigned or changed via the following options:
- Remote mechanisms
   ∘ SMS-OTA
   ∘ IP-OTA (TCP / UDP / CoAP)
   ∘ Non-IP-OTA (SGi / SCEF)
- Local mechanisms
   ∘ Encrypted APDU data tunneled via AT commands
- Preset
   ∘ USIM factory (pre-provisioned default policy)
   ∘ eSIM subscription management full-profile download

The suggested method provides a policy for avoidance or at least handling of aggressions. An aggression in this context refers to any violation of resource allocation limitations. In case an end device excessively uses resources this can be called an aggression, which has to be avoided or handled once it occurs. Examples for an aggression are massive amounts of bandwidth or high power consumptions. A mobile device may be any mobile device whatsoever, for instance a mobile phone or a device being organized in the so-called internet of things IoT.

The mobile device communicates over a mobile telecommunication infrastructure providing services. The mobile telecommunication infrastructure is operated by the so-called Mobile Network Operator MNO, while the mobile devices as such are provided by a vendor or manufacturer. The mobile devices and the mobile telecommunication infrastructure implement commonly known techniques.

A Policy Enforcement Engine refers to a specific module, may it be implemented in hardware and/ or software that firstly manages the policies and secondly makes sure that the policies as such are respected. Consequently, the Policy Enforcement Engine may be a software module being operated on a SIM card. The Policy Enforcement Engine is able to update rules of the policy, at additional rules or delete existing rules. Consequently, every operation regarding the management of the set of rules can be performed using this specific unit.

The policy describes rules which have to be followed by the mobile device and/or the Communication Module, respectively. Such a rule may demand that a mobile device is able to obtain a specific amount of data or pose a specific number of communication rule requests. Once such rules are exceeded a violation and consequently an aggression occurs. Each rule describes an interaction of the mobile device with the mobile telecommunication infrastructure such as a data request or a specific request to subscribe to the telecommunication infrastructure.

For communicating the mobile device operates a Communication Module, which is an interface mediating between the mobile device and the mobile telecommunication infrastructure.

The end device may comprise applications along with a Communication Module. The Communication Module as such may comprise further Communication Module firmware, a radio baseband chipset and at least an interface for communication with the SIM card. The Communication Module may be any communication component, which provides wide area radio connectivity. In general, the Communication Module provides an interface for communication with the outside of the end device, namely the telecommunication infrastructure.

An interaction of the mobile device with the mobile telecommunication infrastructure may be that the mobile device attempts to subscribe to a mobile telecommunication infrastructure for instance using a specific subscription profile. In case several subscription attempts fail an alternative subscription profile can be used and consequently, the aggression of iteratively attempting to subscribe can be remedied.

Operating the policy means that the Policy Enforcement Engine makes sure that the data communication or in general the operation of the hardware and software components is performed properly. Hence, the Policy Enforcement Engine makes sure that the rules of the policy are met and especially, in case an aggression or violation occurs the Policy Enforcement Engine selects actions to be performed in response to such an aggression.

The Policy Enforcement Engine is able to control the Communication Module such that the Communication Module has to implement the set of rules provided by the Policy Enforcement Engine. In case specific rules are not met the Communication Module can be controlled to correct such deficiencies and consequently, a proper communication is implemented. The Communication Module may support the so-called SIM Toolkit STK and for instance the so-called "Run At" command and the USIM-based Policy Enforcement Engine will also be able to directly control the Communication Module's communication functions.

The Policy Enforcement Engine is operated on an embedded Universal Integrated Circuit Card of the mobile device and is not operated in the Communication Module as such as suggested by the prior art. This provides the advantage that the Policy Enforcement Engine and especially the policy as such can be updated at any time over-the-air. Consequently, the advantage arises that not the Communication Module has to be exchanged but rather at runtime the SIM card can be updated. An update of the SIM card is commonly known and can be performed using specific Over-the-Air OTA services and provisioning services. These mechanisms are used for updating the SIM card in the present context. Consequently, it is possible to update the policy management using the SIM card which is open for any access, for instance by the Mobile Network Operator MNO.

In this way the deficiency is overcome that not the vendor or the manufacturer has to update the policy as the manufacturer or the vendor provide the Communication Module. Once the mobile device is ordered and delivered it can still be updated and further customized. Consequently, no dependency on the Communication Module is present but the Universal Integrated Circuit Card as such can be updated over-the-air and consequently, policy management can be implemented easily.

According to an aspect of the present invention the policy is updated over-the-air. This provides the advantage that the Communication Module can be used to receive data for updating the policy along with the Policy Enforcement Engine. In this way respective updates can be performed once the end device is in the field and consequently such updates can be performed at any time.

According to a further aspect of the present invention the set of rules describes a resource allocation, a communication behavior and/or an energy consumption behavior. This provides the advantage that any parameter of the end device can be described and consequently aggressions can be detected. Such an aggression may result from excessive resource allocation or communication behavior that likewise allocates too much resources. The energy consumption is likewise crucial especially in case the mobile device is powered by a battery. Hence, it is possible to monitor the mobile device and provide respective rules which specify that upon a specific behavior a specific action is performed.

According to a further aspect of a further invention the set of rules describes a data amount being transmitted or received. This provides the advantage that the telecommunication infrastructure can be prevented from an overload and an aggression regarding data consumption can be identified.

According to a further aspect of the present invention the set of rules describes a number of data requests. This provides the advantage that in case a mobile device does not manage to subscribe to a telecommunication infrastructure successfully a different subscription profile can be used. For doing so, it is of advantage to specify a number of data requests which has to be exceeded such that a specific action is triggered. For instance, in case the mobile device requests data which is not available such requests can be restricted and the telecommunication infrastructure is likewise prevented from overload.

According to a further aspect of the present invention the set of rules describes at least one action consuming bandwidth and/or energy. This provides the advantage that the overall functionality of the end device can be monitored and controlled accordingly. An aggression does not only refer to the usage of bandwidth but rather an energy consumption is likewise of disadvantage in case it can be considered to be an aggression.

According to a further aspect of the present invention the set of rules describes a consequence in case at least one rule is not met. This provides the advantage that a response can be specified in case one specific rule is not met. Such a consequence may for instance be a triggering of an alternative action. For instance, in case a mobile device sends several data requests such data requests can in consequence be summarized as one single data request and bandwidth and energy is saved accordingly.

According to a further aspect of the present invention a specific policy is provided for each mobile device or each type of mobile devices. This provides the advantage that the Mobile Network Operator MNO can specify specific policies or restricts specific types of mobile devices using specific policies. Consequently, customization can be performed and each mobile end device receives a specific policy.

According to a further aspect of the present invention the embedded Universal Integrated Circuit Card communicates with the Communication Module using a SIM application toolkit. This provides the advantage that predefined commands can be reused and specific commands can be executed to control the functionality of the Communication Module. In this way it is possible to control the functionality of the Communication Module by the SIM card.

According to a further aspect of the present invention the mobile device is a narrowband device. This provides the advantage that end devices being organized in the so-called internet of things can likewise be integrated in the suggested method and system arrangement. This is especially of advantage as the energy consumption of such a narrowband device can be controlled efficiently.

According to a further aspect of the present invention the mobile device queries at least one sensor for operating the policy. This provides the advantage that the end device as such may operate a sensor and consequently, the set of rules can be respected by own sensor data. The end device may for instance measure a bandwidth consumption or an energy consumption and consequently it can be checked whether the set of rules is met or not.

According to a further aspect of the present invention the Policy Enforcement Engine performs power management of the mobile device. This provides the advantage that power consuming tasks can be adapted to be in conformance with the policy and consequently, energy consumption can be restricted.

The object is also solved by an embedded Universal Integrated Circuit Card eUICC arranged for usage in the suggested method. Consequently, an embedded Universal Integrated Circuit Card is suggested which implements the Policy Enforcement Engine, which means that the respective policy along with instructions for enforcement are both stored and operated on the SIM card.

The object is also solved by a system arrangement for policy based aggression management of a mobile device in a mobile telecommunication infrastructure comprising a Policy Enforcement Engine and a storage holding a set of rules forming the policy, a rule describing an interaction of the mobile device with the mobile telecommunication infrastructure using a Communication Module, an interface unit for operating the policy by means of the provided Policy Enforcement Engine, wherein the Policy Enforcement Engine is arranged to at least in part control the Communication Module and the Policy Enforcement Engine is operated on an embedded Universal Integrated Circuit Card of the mobile device.

The object is also solved by a computer program product being arranged to perform the suggested method and operate the suggested system arrangement.

According to the present invention it is of advantage that the method comprises method steps which can likewise be implemented by functionality of the structural features of the system arrangement. Moreover, the system arrangement holds structural features which provide functionality being similar to the suggested method steps. Consequently, the suggested method is able to operate the system arrangement and the system arrangement is able to perform the suggested method.

Further advantages of the present invention are demonstrated with reference to the accompanying figures, which show:
- Fig. 1:: a policy based aggression management solution implemented by the Communication Module as commonly known;
- Fig. 2:: a policy based aggression management solution implemented by the USIM as currently suggested;
- Fig. 3:: a policy based aggression management solution according to an aspect of the present invention;
- Fig. 4:: a table showing how policy enforcement is accomplished according to an aspect of the present invention; and
- Fig. 5:: a flowchart diagram depicting an aspect of the method for policy based aggression management of a mobile device according to an aspect of the present invention.

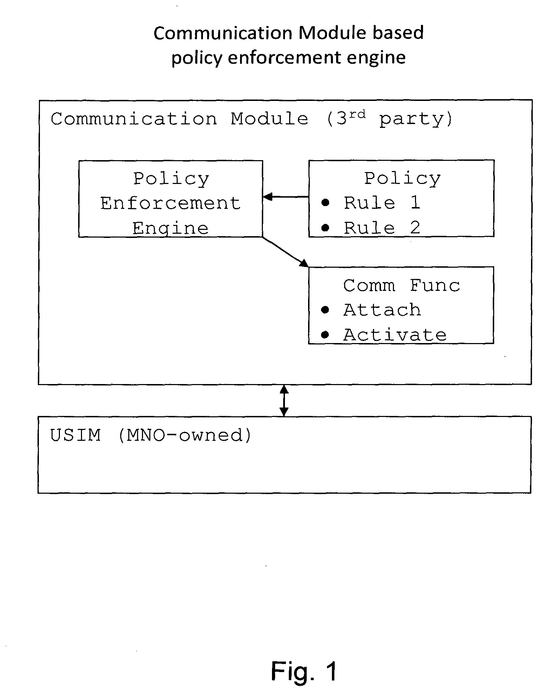

Fig. 1 shows a Communication Module which interacts with a USIM, which stands for Universal Subscriber Identity Module. The USIM may be implemented as an embedded Universal Integrated Circuit Card eUICC. The arrangement as depicted in Fig. 1 provides the disadvantage that the policy enforcement is accomplished by the Communication Module and typically the Mobile Network Operator MNO has no access to update respective policy components.

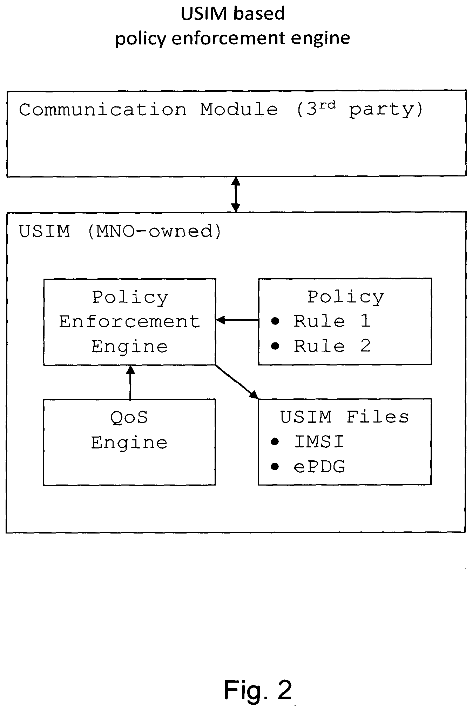

Fig. 2 suggests an adaption where the USIM holds respective components such as the Policy Enforcement Engine, the policy as such, the Quality of Service Engine and further USIM files. As can be seen in the policy component specific rules are provided which can be described as follows.

The policy may consist of rules, actions and conditions. The following is an example for demonstration purposes:
- Rule #1: Excessive IoT device reboot with reconnections to network
   ∘ Condition: Surge of Terminal Profile request in a given time
   ∘ Action: Invalidate IMSI until cool-down period is over
   ∘ Result: Surge of reconnections to network is greatly reduced
- Rule #2: Persistent poor coverage in fixed location
   ∘ Condition: Persistent trouble connecting to network at fixed location
   ∘ Action: Local switch to backup subscriptions stored in the USIM
   ∘ Result: IoT device is able to connect to nearby base stations

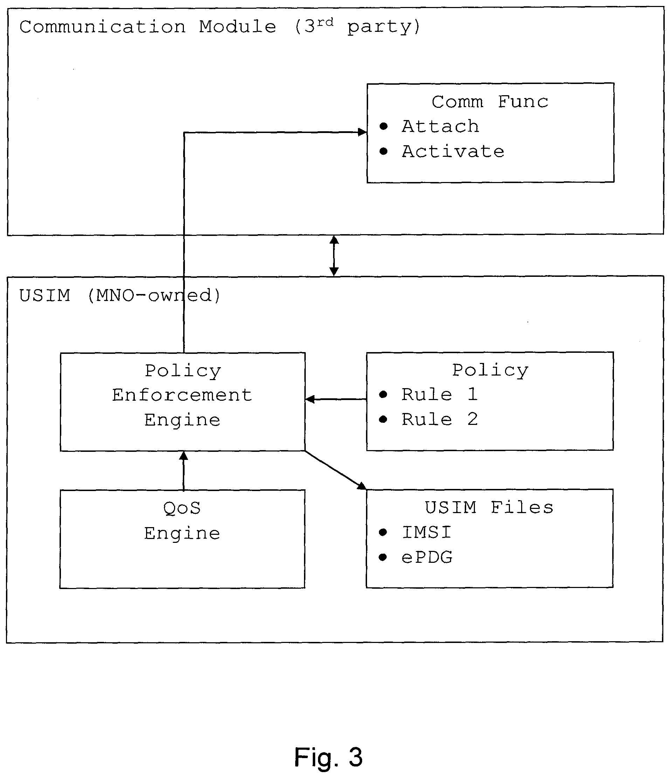

Fig. 3 shows how the functionality of the Communication Module can at least in part be controlled by the USIM, especially the Policy Enforcement Engine. In case the Communication Module supports the SIM Toolkit and especially the "Run At" command the USIM-based Policy Enforcement Engine will be able to directly control the Communication Modules communication functions. This means that the Communication Module as such still performs the network functionality and accordingly, provides an interface but the control is performed by the USIM, and especially the Policy Enforcement Engine. Consequently, each action performed by the Communication Module is in conformance with the underlying policy as the Policy Enforcement Engine only allows such actions.

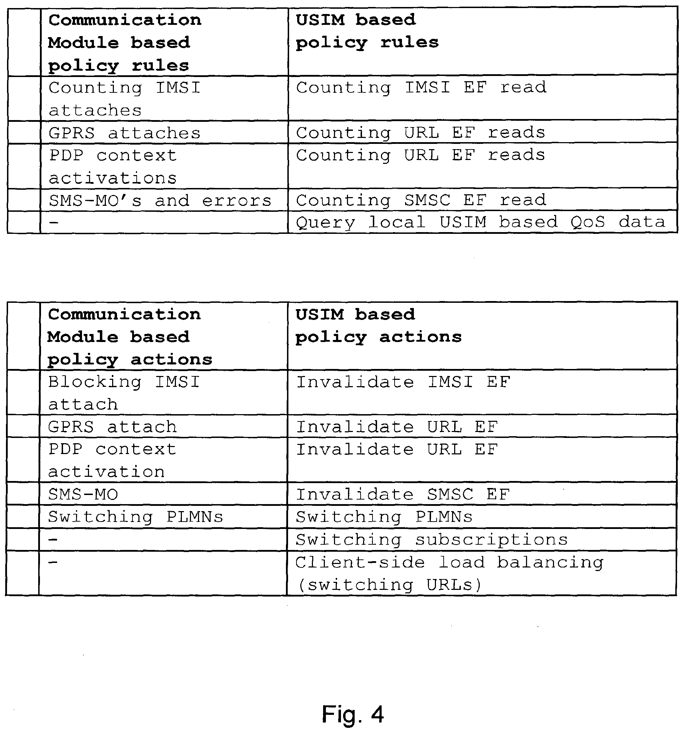

Fig. 4 shows on the left hand side how Communication Module based policy rules may look like and especially how Communication Module based policy actions look like. On the right hand side a translation into the USIM based policy rules and actions is provided. For instance, the telecommunication infrastructure may count the IMSI attaches, which can likewise be performed by the USIM by counting IMSI EF reads. In generally, IMSI is an abbreviation for International Mobile Subscriber Identity while EF refers to elementary files. Hence, the network performance may be monitored as it responds to the number of subscribed end devices. In case too many end devices and consequently, too many IMSI are present respective end devices can be blocked or the respective IMSI can be invalidated. This demonstrates how the policy can be implemented, namely by monitoring allocation of network resources and secondly performing respective responses such that the policy is met. The Policy Enforcement Engine evaluates the rules and executes the actions.

In the following aspects of the power management are provided. The underlying hardware may be a narrowband internet of things end device and infrastructure. Similar to the policy rules referring to the network load the power management can be performed such that an aggression is considered as an energy consumption which is performed at high level and consequently, a respective action can be performed.

As NB-IoT gains acceptance, more applets are installed and are operated on the NB-IoT SIM. Each applet creates its own network connection to send data at different time and sequence, creating an energy drain on the low-power NB-IoT device. In general NB-IoT refers to narrowband internet of things.

Indiscriminate uplink of data when the signal is weak requires a lot of energy as opposed to sending the uplink data when the signal is stronger.
The solution is for a central applet to monitor battery usage, power consumption and signal strength, and to send the consolidated uplink data on behalf of all the other applets at optimal times when the signal strength is stronger and energy consumption is less. Priority tagging of data allows the central applet to determine which data to send when adverse network and battery conditions are encountered.

The power management applet would be the singular applet that monitors the power consumption/ battery usage, and signal strength status/pattern. From this it can determine which type of data uplink is permitted and which is to be deferred or dropped based on the indicated priority. High-priority data will be sent even if battery level is low or low signal strength requires a lot of energy to transmit the data, e.g. call for help/ emergency.
Data uplink of low-to-medium priority data occurs only when the signal is good and transmission requires less energy. Deferred and consolidated data uplink reduces energy required for multiple data connections and associated overheads. If battery status is below a certain pre-defined threshold, only high priority uplink data is processed and sent. Low-priority data may be discarded.

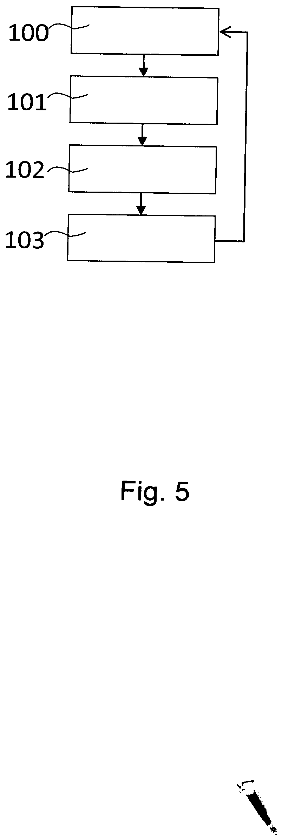

Fig. 5 shows a flowchart depicting a method for policy based aggression management of a mobile device in a mobile telecommunication infrastructure, comprising providing 100 a Policy Enforcement Engine and providing 101 a set of rules forming the policy, each rule describing an interaction of the mobile device with the mobile telecommunication infrastructure using a Communication Module, operating 102 the policy by means of the provided 100 Policy Enforcement Engine, wherein the Policy Enforcement Engine at least in part controls 103 the Communication Module and the Policy Enforcement Engine is operated on an embedded Universal Integrated Circuit Card of the mobile device.

The person skilled in the art recognizes that the aforementioned method steps may be performed iteratively and/or in a different order. Moreover, the suggested method steps may comprise substeps.

## Claims

1. A method for policy based aggression management of a mobile device in a mobile telecommunication infrastructure, comprising:
- providing (100) a Policy Enforcement Engine and providing (101) a set of rules forming the policy, each rule describing an interaction of the mobile device with the mobile telecommunication infrastructure using a Communication Module;
- operating (102) the policy by means of the provided (100) Policy Enforcement Engine, **characterized in that**
- the Policy Enforcement Engine at least in part controls (103) the Communication Module and that the Policy Enforcement Engine is operated on an embedded Universal Integrated Circuit Card of the mobile device.

2. The method according to claim 1, **characterized in that** the policy is updated over the air.

3. The method according to claim 1 or 2, **characterized in that** the set of rules describes a resource allocation, a communication behavior and/ or an energy consumption behavior.

4. The method according to any one of the preceding claims, **characterized in that** the set of rules describes a data amount being transmitted or received.

5. The method according to any one of the preceding claims, **characterized in that** the set of rules describes a number of data requests.

6. The method according to any one of the preceding claims, **characterized in that** the set of rules describes at least one action consuming bandwidth and/ or energy.

7. The method according to any one of the preceding claims, **characterized in that** the set of rules describes a consequence in case at least one rule is not met.

8. The method according to any one of the preceding claims, **characterized in that** a specific policy is provided for each mobile device or each type of mobile devices.

9. The method according to any one of the preceding claims, **characterized in that** the embedded Universal Integrated Circuit Card communicates with the Communication Module using a SIM application toolkit.

10. The method according to any one of the preceding claims, **characterized in that** the mobile device is a narrowband device.

11. The method according to any one of the preceding claims, **characterized in that** the mobile device queries at least one sensor for operating (102) the policy.

12. The method according to any one of the preceding claims, **characterized in that** the Policy Enforcement Engine performs power management of the mobile device.

13. An embedded Universal Integrated Circuit Card arranged for usage in the method according to any one of the preceding claims.

14. A system arrangement for policy based aggression management of a mobile device in a mobile telecommunication infrastructure, comprising:
- a Policy Enforcement Engine and a storage holding a set of rules forming the policy, each rule describing an interaction of the mobile device with the mobile telecommunication infrastructure using a Communication Module;
- an interface unit for operating the policy by means of the provided Policy Enforcement Engine, **characterized in that**
- the Policy Enforcement Engine is arranged to at least in part control the Communication Module and that the Policy Enforcement Engine is operated on an embedded Universal Integrated Circuit Card of the mobile device.

15. A computer program product being arranged to perform a method in accordance with any one of the preceding claims 1 to 12, when being executed on a computer.
